# DEMANDE DE BREVET EUROPEEN

(11) **EP 1 494 460 A1**
(43) Date de publication de la demande: **05.01.2005**
(21) Numéro de dépôt: 03291625.6
(22) Date de dépôt: 02.07.2003
(51) Int. Cl.: H04N 5/00, G06F 1/00

(54) **Procédé et dispositif d'authentification de données numériques par module d'extension d'authentification**

(71) Demandeur: THOMSON Licensing S.A., 92100 Boulogne-Billancourt (FR)
(72) Inventeur: Sarfati, Jean-Claude, 93800 Epinay sur Seine (FR); Chau, Hervé c/o Canal+ Technologies, 75906 Paris, Cedex 15 (FR)
(74) Mandataire: Kohrs, Martin

(57) **Abrégé**

Le procédé prévoit un segment formant module d'extension d'authentification (MEA) exécutable, préalablement authentifié par au moins une fonction d'authentification de la librairie d'authentification, et relié à ladite pluralité de segments selon la relation de chaînage. En réponse à une demande d'authentification d'une pluralité de segments ainsi chaînés selon la relation de chaînage, authentifier chaque segment successif (Sk), et en cas de segment requérant le module d'extension d'authentification (MEA), exécuter ledit module d'extension d'authentification (MEA) afin d'authentifier le segment (Sk) ainsi soumis au module d'extension d'authentification (MEA).

## Description

La présente invention se rapporte à l'authentification de données numériques par module d'extension d'authentification.

Elle trouve une application générale dans l'authentification de données numériques réparties en une pluralité de segments de données reliés les uns aux autres selon une relation de chaînage choisie, notamment de fichiers de données numériques fragmentés en segments.

Elle trouve une application particulière dans l'authentification de logiciels embarqués, par exemple, les logiciels embarqués dans des dispositifs récepteurs/décodeurs utilisés en télévision numérique.

On connaît déjà des systèmes embarqués tels que des dispositifs récepteurs/décodeurs en télévision numérique, qui requièrent une authentification du logiciel situé en mémoire afin de lutter contre le piratage.

En pratique, le procédé d'authentification utilise une librairie d'authentification logée en mémoire non réinscriptible et contenant des fonctions d'authentification prédéterminées.

Par exemple, la librairie d'authentification comprend des fonctions de calcul de signature, des fonctions de déchiffrement, des clés publiques pour le déchiffrement, et des fonctions de vérification de conformité de la signature calculée avec une signature chiffrée de référence.

En pratique, la signature chiffrée de référence forme un certificat qui est placé dans la partie réinscriptible et effaçable de la mémoire du dispositif récepteur/décodeur.

La signature chiffrée de référence formant le certificat apporte un certain degré de sécurité. Toutefois, l'utilisation d'un seul certificat pose un problème lorsque le logiciel à authentifier est composé de plusieurs modules développés par différentes sociétés gérant par exemple le contrôle d'accès, l'interactivité ou d'autres services.

En effet, seul le détenteur de la clé privée a la possibilité de chiffrer la signature de référence, c'est-à-dire l'un des éléments permettant de vérifier l'authenticité du certificat.

Il en résulte des conflits d'intérêts qui peuvent alors aboutir à des situations de blocage nuisibles à l'opérateur du dispositif récepteur/décodeur.

De plus, la librairie d'authentification étant placée en mémoire non réinscriptible, il n'est pas possible de faire évoluer les mécanismes d'authentification sur des plates-formes de dispositif récepteur/décodeur déjà déployées.

La présente invention apporte une solution à ces problèmes.

Elle concerne un procédé d'authentification de données numériques, réparties en une pluralité de segments de données reliés les uns aux autres selon une relation de chaînage choisi, à chaque segment de données étant associée une signature d'authentification prédéterminée.

Selon une définition générale de l'invention, le procédé comprend les étapes suivantes :
- authentifier la pluralité de segments selon un algorithme d'authentification choisi, propre à calculer de manière chaînée et itérative une valeur de signature pour chaque segment successif, et à comparer la valeur de la signature ainsi calculée avec la signature associée, l'authentification du segment suivant étant mise en oeuvre en cas de comparaison positive pour le segment courant, et le premier segment étant authentifié à partir d'au moins une fonction d'une librairie d'authentification contenue en mémoire non réinscriptible ;
- prévoir au moins un segment formant module d'extension d'authentification exécutable, logé en mémoire réinscriptible, préalablement authentifié par au moins une fonction d'authentification de la librairie d'authentification, et relié à ladite pluralité de segments selon la relation de chaînage ; et
- en réponse à une demande d'authentification d'une pluralité de segments ainsi chaînés, authentifier chaque segment successif et en cas de segment requérant le module d'extension d'authentification, exécuter ledit module d'extension d'authentification afin d'authentifier le segment ainsi soumis au module d'extension d'authentification.

Ainsi, le module d'extension d'authentification permet d'ajouter des fonctionnalités spécifiques non prévues au départ, aptes à authentifier des segments d'un logiciel sans modifier pour autant la librairie d'authentification contenue en mémoire non réinscriptible.

Selon une réalisation, à chaque segment est associée une table de données comprenant une signature d'authentification associée, des adresses de début et de fin localisant le segment, des indications de début et de fin localisant la signature associée, un indicateur indiquant que le segment est de type module d'extension d'authentification, et une désignation identifiant un algorithme d'extension d'authentification.

Par exemple, la pluralité de segments de données résulte de la fragmentation d'un fichier de données.

Par exemple, la relation de chaînage est telle que la signature du segment courant comprend l'identifiant de la signature du segment suivant.

La présente invention a également pour objet un dispositif d'authentification de données numériques, réparties en une pluralité de segments de données numériques reliés les uns aux autres selon une relation de chaînage choisie, à chaque segment de données étant associée une signature d'authentification prédéterminée.

Selon un autre aspect de l'invention, le dispositif d'authentification comprend :
- des moyens d'authentification aptes à authentifier la pluralité de segments selon un algorithme d'authentification choisi, propre à calculer de manière chaînée et itérative une valeur de signature pour chaque segment successif et à comparer la valeur de la signature ainsi calculée avec la signature associée, l'authentification du segment suivant étant mise en oeuvre en cas de comparaison positive pour le segment courant, et le premier segment étant authentifié à partir d'au moins une fonction d'une librairie d'authentification contenue en mémoire non réinscriptible ;
- des moyens de traitement aptes à prévoir au moins un segment formant module d'extension d'authentification exécutable, logé en mémoire réinscriptible, préalablement authentifié par au moins une fonction d'authentification de la librairie d'authentification, et relié à ladite pluralité de segments selon la relation de chaînage ; et
- des moyens de traitement propres en réponse à une demande d'authentification d'une pluralité de segments ainsi chaînés selon la relation de chaînage, à authentifier chaque segment successif, et en cas de segment requérant le module d'extension d'authentification, à exécuter ledit module d'extension d'authentification afin d'authentifier le segment ainsi soumis au module d'extension d'authentification .

Selon une réalisation, à chaque segment est associée une table de données comprenant une signature d'authentification associée, des adresses de début et de fin localisant le segment, des indications de début et de fin localisant la signature associée, un indicateur indiquant que le segment est de type module d'extension d'authentification, et une désignation identifiant un algorithme d'extension d'authentification.

En pratique, la pluralité de segments de données résulte de la fragmentation d'un fichier de données.

De préférence, la relation de chaînage est telle que la signature du segment courant comprend l'identifiant de la signature du segment suivant.

La présente invention a également pour objet un support d'informations lisibles par un système informatique éventuellement ou totalement amovible, notamment CD ROM ou support magnétique, tel un disque dur ou une disquette, ou support transmissible, tel un signal électrique ou optique.

Selon une autre caractéristique importante de l'invention, le support d'informations comporte des instructions d'un programme d'ordinateur permettant la mise en oeuvre du procédé d'authentification ci-dessus mentionné, lorsque ce programme est chargé et exécuté par un système informatique.

La présente invention a également pour objet un programme d'ordinateur stocké sur un support d'informations, ledit programme comportant des instructions permettant la mise en oeuvre du procédé ci-dessus mentionné lorsque ce programme est chargé et exécuté par un système informatique.

D'autres caractéristiques et avantages de l'invention apparaîtront à la lumière de la description détaillée ci-après et des dessins dans lesquels :
- la **figure 1** représente schématiquement une mémoire d'un dispositif récepteur/décodeur dont la zone non réinscriptible comprend une librairie d'authentification et dont la partie réinscriptible comprend une pluralité de segments, reliés l'un à l'autre selon une relation de chaînage choisie selon l'invention ;
- la **figure 2** représente une table de données associées à chaque segment selon l'invention ;
- la **figure 3** représente schématiquement un organigramme illustrant les étapes du procédé d'authentification selon l'invention; et
- la **figure 4** représente schématiquement l'interaction entre la librairie d'authentification et le module d'extension d'authentification selon l'invention.

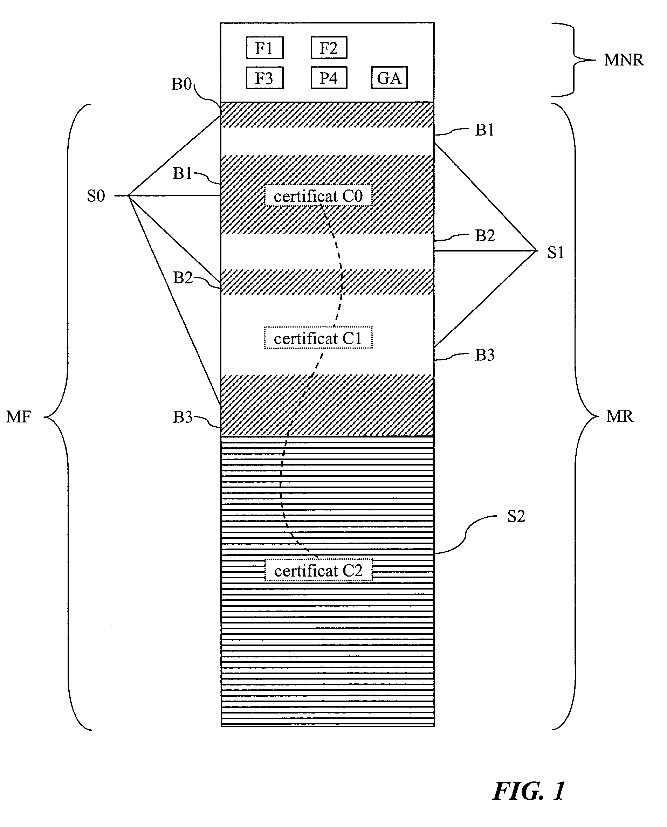

En référence à la **figure 1**, on a représenté une mémoire flash MF d'un dispositif récepteur/décodeur utilisé en télévision numérique.

Le dispositif récepteur/décodeur exécute des logiciels dont il convient de vérifier l'authentification afin d'éviter le piratage.

La mémoire flash MF comporte une zone non réinscriptible MNR et une zone réinscriptible MR.

Le logiciel à authentifier est découpé en i segments S auxquels sont associés i certificats C. Chaque segment Sk est découpé en blocs Bj non nécessairement contigus.

Les segments S sont reliés les uns aux autres selon une relation de chaînage choisie.

En pratique, la relation de chaînage est telle que chaque certificat Ck contient l'identifiant du certificat suivant Ck+1.

Chaque certificat Ck contient sous forme chiffrée la signature du segment Sk auquel il se rapporte. Le certificat Ck est suivi de la liste des blocs B constituant le segment Sk.

Le premier bloc B0 du premier segment S0 décrit le certificat C0 lui-même.

Le certificat Ck est généralement une signature d'authentification chiffrée par une clé privée.

La clé privée utilisée pour chaque certificat Ck peut être différente d'un certificat à un autre.

Ainsi, il est possible d'attribuer une clé privée à chaque société intervenant dans l'élaboration d'un logiciel pour lui permettre d'authentifier le ou les segments S qui contiennent les modules logiciels à authentifier.

En zone non réinscriptible MNR, il est prévu de loger en page mémoire une librairie d'authentification contenant des fonctions F1 à F4 et un gestionnaire d'authentification GA que l'on décrira plus en détail ci-après.

Les clés publiques correspondant aux clés privées sont contenues dans la librairie d'authentification.

Par exemple, le nombre de clés publiques est limité au nombre de trois.

Par exemple, la librairie d'authentification comprend quatre fonctions F individualisées en fonctions F1 à F4.

La première fonction F1, désignée "*init_digest*"*,* est une fonction d'initialisation apte à initialiser les calculs de signature.

La fonction F1 est appelée à chaque nouveau segment Sk signalé par un certificat Ck. La fonction F1 permet d'effectuer les initialisations nécessaires au calcul de signature.

La seconde fonction F2, désignée *"calc_digest",* est une fonction de calcul de bloc qui est appelée pour chaque bloc décrit afin de cumuler le calcul de signatures du segment.

La troisième fonction F3, désignée *"end_digest",* est une fonction de calcul de segment qui est appelée après le calcul de signature cumulé du dernier bloc pour finaliser le calcul de la signature du segment.

Enfin, la quatrième fonction F4, désignée *"verif_digest"* est une fonction de vérification qui vérifie la conformité de la signature calculée avec la signature attendue pour le segment considéré.

Pour cela, la fonction de vérification F4 déchiffre le certificat Ck et compare le certificat ainsi reçu avec le résultat calculé. En pratique, la clé publique à utiliser est indiquée dans le certificat Ck. La signature calculée et le certificat sont passés en paramètre d'entrée à la fonction de vérification F4. La fonction de vérification F4 peut également prendre en paramètre d'entrée un numéro, par exemple le numéro de série du terminal sur lequel est embarqué le logiciel à authentifier.

En sortie, la fonction de vérification F4 délivre un signal qui peut prendre les valeurs suivantes :
- "*OK*", c'est à dire segment correctement authentifié;
- "*KO*", c'est à dire segment non authentifié ;
- *"VOID",* correspondant à un segment constitué d'un certificat qui sera décrit plus amplement ci-après ;
- *"DONE",* c'est à dire que tous les éléments ont été authentifiés avec succès.

Dès qu'un segment S est déclaré "*KO*", alors tous les autres segments proposés sont également déclarés "*KO*".

En pratique, le procédé d'authentification comprend les étapes suivantes :
- i) rechercher le premier certificat C0 dont l'identifiant est égal à zéro ;
- ii) authentifier le segment S0 associé;
- iii) appeler la fonction d'initialisation F1 et procéder aux calculs de signature "*calc_digest*" selon la fonction F2;
- iv) appeler la fonction F3 de fin de calcul de signature "*init_digest*";
- v) appeler la fonction F4 de vérification "*verif_digest*".

Les étapes iii) à v) sont répétées pour chaque certificat Ck relié les uns aux autres selon la relation de chaînage ci-dessus mentionnée, jusqu'au dernier certificat Ck=i.

En pratique, la demande d'authentification des certificats C émane d'un logiciel, par exemple un logiciel du constructeur du dispositif récepteur/décodeur qui va effectuer les opérations de recherche des certificats et qui ensuite présente les blocs à authentifier aux fonctions F1 à F4 de la librairie d'authentification, selon la relation de chaînage choisie.

Ainsi, l'authentification se fait dans l'ordre imposé par le chaînage des certificats.

Pour être authentifié par la librairie d'authentification, un logiciel doit contenir au moins un certificat. De plus, l'ensemble de la partie effaçable ou réinscriptible MR de la mémoire, doit être vérifié.

Ainsi, le premier certificat C0 de la chaîne contient la taille de la partie effaçable MR de la mémoire flash MF pour permettre à la librairie de vérifier la fin du traitement du dernier segment qui est, en pratique, repérable par le dernier certificat Ck=i de la chaîne. Ainsi, il est possible de déterminer que l'ensemble de la mémoire flash a bien été vérifié.

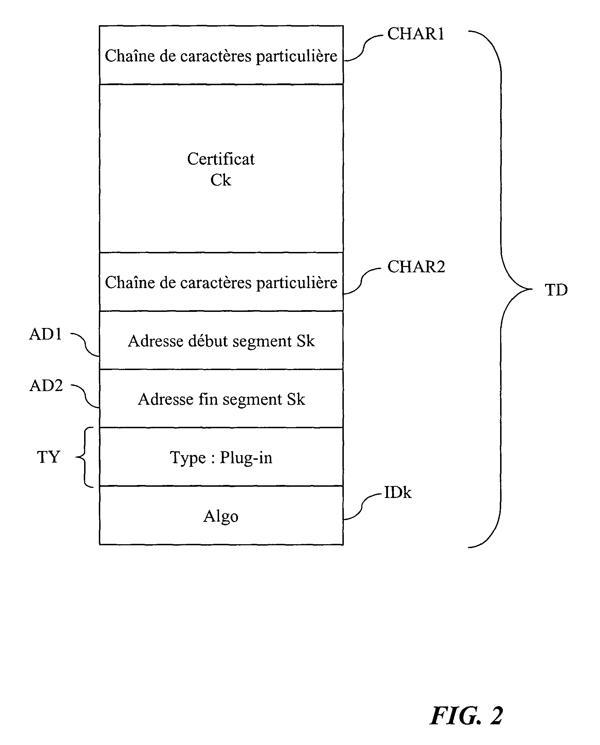

En référence à la **figure 2**, chaque segment Sk est associé à une table de données TD comprenant des informations permettant de mettre en oeuvre le procédé selon l'invention.

La table TD comprend en premier lieu la signature Ck associée au segment Sk. Des indications de début CHAR 1 et de fin CHAR 2 localisent la signature C. Par exemple, les indications CHAR1 et CHAR2 sont du type chaîne de caractères.

En second lieu, la table TD comprend le segment Sk. Des indications de début AD 1 de fin AD 2 localisent le segment associé S. Par exemple, les indications AD1 et AD2 sont du type adresse.

En troisième lieu, la table TD comprend un indicateur TY indiquant que le segment Sk est de type module d'extension d'authentification MEA.

Enfin, en quatrième lieu, la table TD comprend une désignation ID identifiant un algorithme d'authentification dédié et/ou attaché au module d'extension d'authentification MEA.

En pratique, l'identifiant ID de l'algorithme identifie l'algorithme d'authentification à utiliser par le module d'extension d'authentification. Cet algorithme à utiliser peut être le gestionnaire d'authentification GA de la librairie d'authentification ou bien un module d'extension d'authentification MEA, ("*plug-in"* en langue anglaise) que l'on décrira plus en détail ci-après.

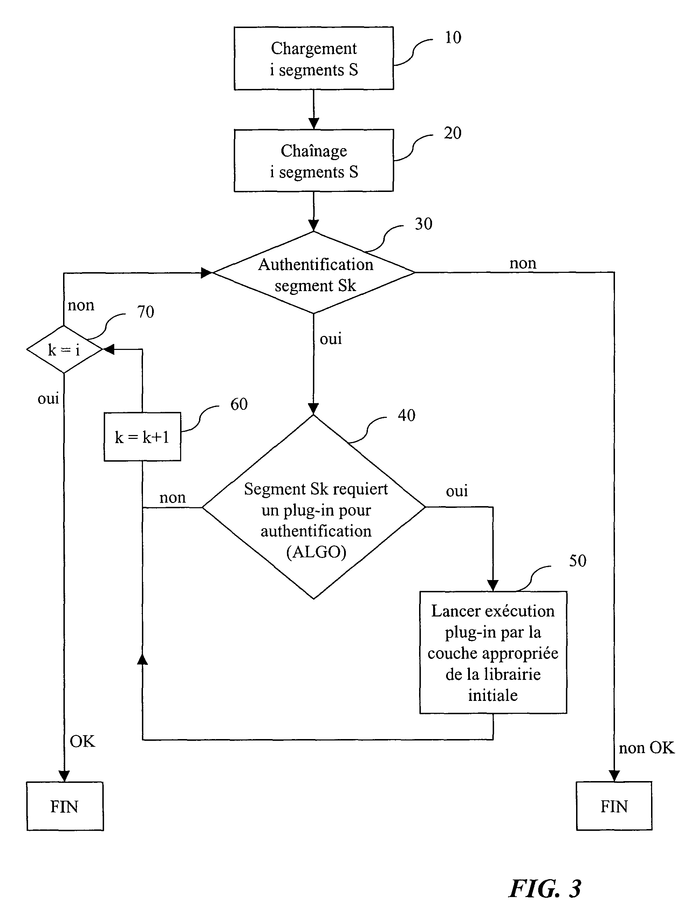

En référence à la **figure 3**, on a représenté les étapes essentielles du procédé d'authentification selon l'invention.

L'étape 10 prévoit le chargement des i segments S à traiter par le dispositif d'authentification selon l'invention.

En pratique, c'est le gestionnaire d'authentification GA qui scrute le fichier à authentifier, et détecte les zones des segments et certificats à traiter à l'aide des indications CHAR1 et CHAR2 ainsi que AD1 et AD2.

Selon l'étape 20, il est prévu de vérifier le chaînage des i segments S selon la relation de chaînage choisie.

Selon l'étape 30, il est prévu d'authentifier la pluralité de segments S, de manière successive et par itération, ici le segment Sk.

Le gestionnaire d'authentification GA met en oeuvre l'algorithme d'authentification selon l'invention, et en réponse à un segment Sk indiquant qu'il convient de mettre en oeuvre le module d'extension d'authentification MEA (étape 40), ledit gestionnaire d'authentification lance le module d'extension de modification (étape 50) afin d'authentifier le segment Sk à traiter par ledit module d'extension d'authentification MEA.

Après exécution (étape 60) du module d'extension d'authentification MEA, il est prévu de passer au segment suivant Sk=k+1 et de répéter la boucle d'authentification jusqu'au dernier segment Sk=1 (étape 70).

En pratique, le gestionnaire d'authentification GA, lorsqu'il lance le module d'extension d'authentification MEA, indique audit module d'extension d'authentification les paramètres de traitement lui permettant d'authentifier le segment à traiter. Ces paramètres comprennent notamment les adresses de début AD 1 et de fin AD 2 du segment à authentifier.

Avant d'authentifier le segment par le module d'extension d'authentification, il convient d'authentifier ledit module d'extension d'authentification MEA au préalable.

Pour cela, lorsque le certificat Ck contient une information TY de type module d'extension d'authentification ou "plug-in", alors le gestionnaire d'authentification authentifie ledit module d'extension d'authentification au moyen des fonctions F1 à F4 de la librairie d'authentification. Ensuite, le gestionnaire d'authentification stocke l'identifiant ID de ce module d'extension d'authentification MEA ainsi authentifié dans la table de donnée TD ci-dessus mentionnée. Cet identifiant ID correspond en fait au numéro d'algorithme susceptible d'être utilisé par le module d'extension d'authentification.

Le module d'extension d'authentification est alors ensuite utilisé ultérieurement en réponse à une sollicitation par le gestionnaire d'authentification pour authentifier un segment pour lequel le certificat indique une affirmation TY="algo" correspondant au numéro d'algorithme du module d'extension d'authentification.

Ainsi, le module d'extension d'authentification est exécuté comme une fonction d'authentification pour authentifier un segment en lieu et place des fonctions de la librairie d'authentification, ce module d'extension d'authentification ayant été, au préalable, lui-même authentifié par la librairie d'authentification.

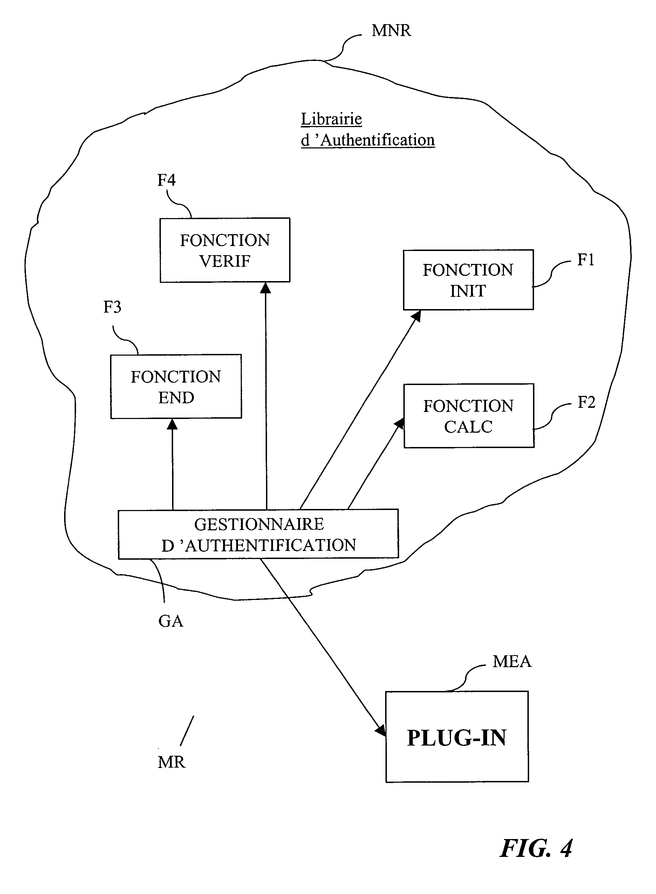

En référence à **la figure 4**, le gestionnaire d'authentification GA interagit avec les fonctions F1 à F4 de la librairie d'authentification située en mémoire non réinscriptible MNR et avec le module d'extension d'authentification MEA situé en mémoire réinscriptible MR.

Le module d'extension d'authentification MEA comprend une interface recevant en paramètre d'entrée les paramètres utilisés par la librairie d'authentification et un paramètre indiquant le type TY de fonction à exécuter, à savoir l'une des quatre fonctions F1 à F4.

En sortie, la fonction de vérification F4 du module d'extension d'authentification MEA retourne les informations suivantes :
- "*KO*" correspondant à l'authentification du segment soumis au module d'extension d'authentification MEA ;
- *"VOID"* indiquant que le module d'extension d'authentification a détecté un certificat *"VOID"* ainsi soumis au module d'extension d'authentification MEA ; et
- *"DONE"* indiquant la fin du succès de l'authentification.

En pratique, le module d'extension d'authentification MEA à utiliser pour un segment non exécutable est indiqué grâce au numéro d'algorithme TY indiqué dans le certificat associé.

Lorsque le module d'extension d'authentification MEA n'a pas été authentifié au préalable par la librairie d'authentification, alors le procédé n'exécute pas le module d'extension d'authentification et la fonction de vérification F4 "*verif-digest*" retourne une indication de type "*KO*".

L'authentification selon l'invention à partir d'un module d'extension d'authentification trouve de nombreuses applications.

Par exemple, l'authentification à partir d'un module d'extension d'authentification trouve une application dans l'authentification de segment contenant des éléments de remplissage ou *"padding".*

Par exemple, de tels segments de remplissage sont remplis avec une valeur fixe sur un, deux ou quatre octets. Ainsi, selon l'invention, au lieu d'utiliser un algorithme de type condensation ou hachage, ayant des inconvénients en terme de temps de traitement, il est prévu de créer selon l'invention un segment de type module d'extension d'authentification MEA exécutable avec une information relative à l'algorithme d'authentification à mettre en place. Ainsi, le module d'extension d'authentification vérifie à l'aide d'une simple boucle de comparaison que le segment à traiter est rempli avec une valeur fixe.

Dans ce cas, le certificat lié au segment de remplissage contenant une valeur fixe porte la valeur d'un numéro d'algorithme correspondant, par exemple "algo2". La librairie d'authentification utilise le code contenu dans le segment exécutable relatif à l'algorithme « algo2 » pour authentifier le segment de remplissage.

Le procédé selon l'invention permet également de limiter l'authentification d'un logiciel fragmenté en plusieurs segments à l'authentification d'un seul segment.

Si l'authentification de ce segment unique est négative, alors l'authentification de l'ensemble du logiciel est négative, tandis que si l'authentification est positive, le reste du logiciel n'a pas à être authentifié.

Une application peut correspondre à l'authentification d'une liste de décodeurs contenus justement dans le segment à authentifier.

Les fonctions de calcul F1 à F3 et de vérification F4 authentifient alors de façon classique le segment contenant la liste, la fonction de vérification F4 s'assure que le numéro de série qui lui est passé en paramètre fait partie de la liste. Si tel est le cas, la fonction F4 retourne la valeur *"DONE".* En revanche, si le terminal ne fait pas partie de la liste, la fonction F4 retourne la valeur "*KO*".

En pratique, le module d'extension d'authentification MEA incrémente les fonctionnalités initiales prévues dans la librairie d'authentification en permettant notamment de créer des modules d'extension d'authentification téléchargeables qui forcent l'échec de l'authentification pour une liste de décodeurs souhaités, de rajouter des clés publiques etc.

Le module d'extension d'authentification permet ainsi de sécuriser le téléchargement de logiciels sur une plate-forme. En identifiant à la réception le logiciel téléchargé, il est possible selon le procédé d'authentification conforme à l'invention de s'assurer que le logiciel téléchargé est intègre, n'est pas contaminé ou, plus généralement, n'a pas été modifié volontairement avec objectif de nuire.

## Revendications

1. Procédé d'authentification de données numériques, réparties en une pluralité de i segments (S) de données reliés les uns aux autres selon une relation de chaînage choisie, à chaque segment (Sk) de données étant associée une signature d'authentification (Ck), **caractérisé en ce qu'**il comprend les étapes suivantes :
- authentifier la pluralité de segments (S) selon un algorithme d'authentification choisi, propre à calculer de manière chaînée et itérative une valeur de signature pour chaque segment successif (Sk) et à comparer la valeur de la signature (Ck) ainsi calculée avec la signature associée, l'authentification du segment suivant (Sk+1) étant mise en oeuvre en cas de comparaison positive pour le segment courant (Sk) et le premier segment (S0) étant authentifié à partir d'au moins une fonction d'une librairie d'authentification contenue en mémoire non réinscriptible (MNR),
- prévoir au moins un segment formant module d'extension d'authentification (MEA) exécutable, préalablement authentifié par au moins une fonction d'authentification de la librairie d'authentification, et relié à ladite pluralité de segments selon la relation de chaînage, et
- en réponse à une demande d'authentification d'une pluralité de segments ainsi chaînés selon la relation de chaînage, authentifier chaque segment successif (Sk), et en cas de segment requérant le module d'extension d'authentification (MEA), exécuter ledit module d'extension d'authentification (MEA) afin d'authentifier le segment (Sk) ainsi soumis au module d'extension d'authentification (MEA).

2. Procédé selon la revendication 1, **caractérisé en ce que** à chaque segment (Sk) est associée une table de données (TDk) comprenant une signature (Ck) associée, des adresses de début (AD1) et de fin (AD2) localisant le segment, des indications de début (CHAR1) et de fin (CHAR2) localisant la signature associée, un indicateur TY indiquant que le segment (Sk) est de type module d'extension d'authentification, et une désignation ID identifiant un algorithme d'extension d'authentification.

3. Procédé selon la revendication 1 ou la revendication 2, **caractérisé en ce que** la pluralité de segments de données résulte de la fragmentation d'un fichier de données.

4. Procédé selon l'une des revendications 1 à 3, **caractérisé en ce qu'**au moins un segment comprend en outre une indication relative à l'algorithme d'extension d'authentification.

5. Procédé selon l'une quelconque des revendications précédentes, **caractérisé en ce que** la relation de chaînage est telle que la signature du segment courant comprend l'identifiant comprend l'identifiant de la signature du segment suivant.

6. Dispositif d'authentification de données numériques, réparties en une pluralité de segments de données numériques reliés les uns aux autres selon une relation de chaînage choisie, à chaque segment de données étant associée une signature d'authentification, **caractérisé en ce que** le dispositif d'authentification comprend :
- des moyens d'authentification (GA, F1, F2, F3, F4) aptes à authentifier la pluralité de segments selon un algorithme d'authentification choisi, propre à calculer de manière chaînée et itérative une valeur de signature pour chaque segment successif et à comparer la valeur de la signature ainsi calculée avec la signature associée, l'authentification du segment suivant étant mise en oeuvre en cas de comparaison positive pour le segment courant, et le premier segment étant authentifié à partir d'au moins une fonction d'une librairie d'authentification contenue en mémoire non réinscriptible (MNR) ;
- des moyens de traitement aptes à prévoir au moins un segment formant module d'extension d'authentification exécutable (MEA), logé en mémoire réinscriptible (MR), préalablement authentifié par au moins une fonction d'authentification de la librairie d'authentification, et relié à ladite pluralité de segments selon la relation de chaînage ; et
- des moyens de traitement propres en réponse à une demande d'authentification d'une pluralité de segments ainsi chaînés selon la relation de chaînage, à authentifier chaque segment successif (Sk), et en cas de segment requérant le module d'extension d'authentification (MEA), à exécuter ledit module d'extension d'authentification afin d'authentifier le segment ainsi soumis au module d'extension d'authentification.

7. Dispositif selon la revendication 6, **caractérisé en ce qu'**à chaque segment est associée une table de données (TD) comprenant une signature d'authentification associée (Ck), des adresses de début et de fin localisant le segment (Sk), des indications de début et de fin localisant la signature associée, un indicateur (TY) indiquant que le segment est de type module d'extension d'authentification, et une désignation identifiant un algorithme d'extension d'authentification.

8. Dispositif selon la revendication 6 ou la revendication 7, **caractérisé en ce que** la pluralité de segments de données résulte de la fragmentation d'un fichier de données.

9. Dispositif selon l'une des revendications 6 à 8, **caractérisé en ce que** la relation de chaînage est telle que la signature du segment courant comprend l'identifiant de la signature du segment suivant.

10. Support d'informations lisibles par un système informatique éventuellement ou totalement amovible, notamment CD ROM ou support magnétique, tel un disque dur ou une disquette, ou support transmissible, tel un signal électrique ou optique, **caractérisé en ce que** le support d'informations comporte des instructions d'un programme d'ordinateur permettant la mise en oeuvre du procédé d'authentification selon l'une des revendications 1 à 5, lorsque ce programme est chargé et exécuté par un système informatique.

11. Programme d'ordinateur stocké sur un support d'informations, ledit programme comportant des instructions permettant la mise en oeuvre du procédé selon l'une des revendications 1 à 5 lorsque ce programme est chargé et exécuté par un système informatique.
